# FASCICULE DE BREVET EUROPEEN

(11) **EP 4 355 698 B1**
(45) Date de publication et mention de la délivrance du brevet: **09.04.2025**
(21) Numéro de dépôt: 22735219.2
(22) Date de dépôt: 13.06.2022
(51) Int. Cl.: C03B 23/023, C03B 40/00, C03B 23/03, B29C 43/00

(54) **OUTIL DE CONFORMATION D'UN SUBSTRAT CHAUD**
WERKZEUG ZUM FORMEN EINES HEISSEN SUBSTRATS
TOOL FOR SHAPING A HOT SUBSTRATE

(30) Priorité: 14.06.2021 FR 2106247
(43) Date de publication de la demande: 24.04.2024
(73) Titulaire: Saint-Gobain Glass France, 92400 Courbevoie (FR)
(72) Inventeur: FREBOURG, Philippe, 60300 SENLIS (FR); SCIACCHITANO, Gaëtan, 95120 ERMONT (FR); VALCKE, David, 60490 BOULOGNE LA GRASSE (FR); GOBIN, Jérôme, 60170 SAINT LEGER AUX BOIS (FR)
(74) Mandataire: Saint-Gobain Recherche
(86) Numéro de dépôt international: PCT/FR2022/051125
(87) Numéro de publication internationale: WO 2022/263759

(56) Documents cités:
- EP-A1- 0 838 438
- DE-A1- 10 335 453
- US-A1- 2011 205 485

## Description

L'invention concerne une technique de bombage d'une feuille de verre, suivie d'une étape de refroidissement. La technique selon l'invention est soit adaptée au bombage d'une feuille de verre notamment destinée à être trempée, soit au bombage de feuilles de verre ensuite refroidies puis assemblées deux à deux pour former un vitrage feuilleté.

### Art antérieur

Pour donner une forme à un substrat chaud comme une feuille de verre, plusieurs techniques sont utilisées. Parmi ces techniques, une d'entre elles consiste à avoir les feuilles de verre qui sont amenées une à une au travers d'un four de chauffage pour élever leur température à une température voisine de la température de ramollissement, les feuilles de verre étant convoyées sur un lit de rouleaux. Les feuilles de verre sont ensuite conduites, dès la sortie du four, à une station de bombage. Dans la station de bombage la feuille de verre est soulevée du convoyeur par un cadre possédant la forme que l'on souhaite conférer à la feuille de verre. Ce cadre est communément appelé « cadre de pressage » ou « anneau de pressage ». Suivant la configuration du lit de rouleaux, le cadre est continu ou discontinu de façon à pouvoir traverser le lit de rouleaux sur lequel repose initialement la feuille de verre. Le cadre élève ensuite la feuille de verre pour venir la presser contre une forme pleine supérieure, communément appelée forme de bombage, dont la forme est complémentaire de celle du cadre et correspond donc à la forme désirée pour la feuille de verre. Après pressage, le verre est aspiré et maintenu contre la forme, puis il est largué soit sur le lit de rouleaux, soit sur un autre cadre appelé cadre de transfert vers la zone de refroidissement. Dans le premier cas, les rouleaux se remettent ensuite en mouvement pour conduire la feuille de verre jusqu'à la station de trempe.

Les deux outillages que sont le cadre de pressage et la forme de bombage sont usuellement recouverts d'une couche de matériau intercalaire afin d'éviter la formation de choc thermique sur la feuille de verre lorsque cette dernière vient au contact des outillages. Ces matériaux sont souvent des textiles, tissu ou tricots à base de fibres réfractaires comme de la silice, métalliques ou de polymère résistant à haute température comme des fibres de Kevlar^{®} par exemple.

Outre la particularité du cadre inférieur qui vient traverser le lit de rouleaux qui fait office de convoyeur, ce type de technique se caractérise par le fait que l'opération de bombage s'opère en dehors du four ou tout au moins d'une enceinte maintenue à haute température. Nous entendons par « haute température », des températures typiquement supérieures à 250-300 °C. Ce type de technique doit ainsi être considérée comme une technologie à froid, ce qualificatif définissant le lieu de la station de bombage en dehors d'une enceinte maintenue à haute température : cela signifie que la maîtrise du positionnement des outils de bombage est plus simple que dans le cas des technologies à chaud, et qu'en contrepartie le procédé de bombage est une course contre le temps puisque dès la sortie du four, la feuille de verre va se refroidir. Les modifications de l'opération de bombage ou de ses conditions sont de ce fait délicates et limitées.

Un inconvénient de ce procédé est que la forme supérieure et le cadre sont des pièces spécifiques. On entend par là que, pour chaque forme de verre, la forme supérieure et le cadre doivent être usinés aux dimensions exactes de la forme de verre à réaliser.

Pour permette à la forme supérieure d'être utilisable pour différentes formes de verre, il est prévu que cette forme supérieure soit déformable. Une solution est d'utiliser une forme supérieure se présentant sous la forme d'une membrane réalisée dans un matériau polymère. Un tel matériau présente l'avantage d'être soupe et donc de pouvoir être déformé à la courbure souhaitée.

Néanmoins, une membrane polymère utilisée comme forme supérieure pour une station de bombage n'est pas évidente car la température élevée dans la station de bombage tend à endommager ladite membrane.

EP 0838 438 A1, DE 103 35 453 A1 et US 2011/205485 A1 décrivent le bombage de feuilles de verre au moyen de membrane.

### Résumé de l'invention

Un but de la présente invention consiste à résoudre les problèmes de l'art antérieur en fournissant une forme supérieure pour station de bombage qui soit adaptable c'est-à-dire apte à permettre la réalisation de feuille de verre ayant des courbures différentes tout en supportant les contraintes de température inhérentes au bombage.

A ce titre, l'invention concerne un outil de conformation comprenant une membrane réalisée dans un matériau polymère, ladite membrane présentant une surface de conformation, caractérisé en ce que ledit outil comprend des moyens de thermalisation insérés dans ladite membrane
Selon un exemple, ledit outil comprend en outre des moyens permettant d'augmenter la conductivité thermique de la membrane.

Selon un exemple, les moyens de thermalisation comprennent au moins un conduit traversant la membrane selon son profil et dans lequel un liquide caloporteur circule.

Selon un exemple, les moyens de thermalisation comprennent une série de conduits traversant la membrane selon son profil et dans lequel un liquide circule, ces conduits s'étendant parallèlement les uns aux autres.

Selon un exemple, le liquide caloporteur de deux conduits adjacents circule de façon opposée.

Selon un exemple, ledit outil comprend une autre série de conduits s'étendant dans une direction orthogonale à la direction dans laquelle une première série de conduits s'étendent.

Selon un exemple, les moyens permettant d'augmenter la conductivité thermique de la membrane comprennent des particules métalliques ou à base de carbone intégrées dans le matériau polymère.

Selon un exemple, les moyens permettant d'augmenter la conductivité thermique de la membrane comprennent des fibres métalliques ou des fibres à base de carbone.

Selon un exemple, les moyens permettant d'augmenter la conductivité thermique de la membrane comprennent un textile.

Selon un exemple, le textile est composé de fibres métalliques ou de fils filés ou est un tricot.

Selon un exemple, le liquide caloporteur est refroidissant ou chauffant.

L'invention concerne en outre un dispositif de bombage d'une feuille de verre comprenant un cadre de pressage agencé pour s'ajuster à la feuille de verre et aller la presser contre une forme supérieure, la forme supérieure étant un outil de conformation selon l'invention.

L'invention concerne en outre un procédé de réalisation d'une membrane d'un outil de conformation comprenant les étapes suivantes :
Se munir d'un moule ayant la forme de la membrane à réaliser et du matériau polymère constitutif de la membrane ;
Verser ledit matériau dans le moule ;
Réticuler le matériau ;
Caractérisé en ce que ledit procédé comprend une étape de mise en place de moyens de thermalisation et au moins une étape de mise en place de moyens permettant d'augmenter la conductivité thermique.

Selon un exemple, le procédé comprend plusieurs étapes consistant à verser ledit matériau dans le moule et plusieurs étapes consistant à réticuler le matériau, chaque étape consistant à verser le matériau dans le moule étant suivi par une étape consistant à réticuler ledit matériau.

Selon un exemple, l'étape de mise en place des moyens de thermalisation consiste à se munir des moyens de thermalisation et à les placer dans le moule avant que le matériau constitutif de la membrane ne soit versé.

Selon un exemple, l'étape de mise en place des moyens de thermalisation consiste à se munir des moyens de thermalisation et à se munir d'un moule intermédiaire dont la surface est similaire à celle de la membrane à réaliser mais avec une épaisseur moindre, à placer les moyens de thermalisation dans ledit moule intermédiaire et à verser une partie du matériau constitutif de la membrane dans le moule intermédiaire, le matériau étant ensuite réticulé pour former une tranche intermédiaire,
cette tranche intermédiaire étant placée dans le moule de la membrane pendant l'étape consistant à verser ledit matériau constitutif de la membrane.

Selon un exemple, l'étape de mise en place des moyens d'augmentation de la conductivité thermique consiste à se munir des moyens d'augmentation de la conductivité thermique sous formes de particules ou fibres métalliques ou de carbone et les mélanger au matériau constitutif de la membrane avant que ce matériau ne soit versé.

Selon un exemple, l'étape de mise en place des moyens d'augmentation de la conductivité thermique consiste à se munir des moyens d'augmentation de la conductivité thermique sous formes de particules ou fibres métalliques ou de carbone et les mélanger au matériau constitutif de la membrane après le versement dudit matériau constitutif de la membrane.

Selon un exemple, l'étape de mise en place des moyens d'augmentation de la conductivité thermique consiste à se munir des moyens d'augmentation de la conductivité thermique sous formes d'un textile et le placer dans le moule pendant le versement du matériau constitutif de la membrane.

Selon un exemple, l'étape de mise en place des moyens d'augmentation de la conductivité thermique sous forme d'un textile consiste à se munir du textile et à se munir d'un moule intermédiaire dont la surface est similaire à celle de la membrane à réaliser mais avec une épaisseur moindre, à y placer ledit textile et à verser une partie du matériau constitutif de la membrane dans ledit moule intermédiaire, le matériau étant ensuite réticulé pour former une tranche intermédiaire,
cette tranche intermédiaire étant placée dans le moule de la membrane pendant l'étape consistant à verser ledit matériau constitutif de la membrane.

Selon un exemple, des moyens permettant d'augmenter la conductivité thermique sont magnétiques et dans lequel au moins une étape de mise en place de moyens permettant d'augmenter la conductivité thermique utilise des aimants pour les positionner.

Selon un exemple, le procédé est tel qu'il comprend, avant les étapes de mise en place de moyens de thermalisation et de mise en place de moyens permettant d'augmenter la conductivité thermique, au moins une étape consistant à verser une partie du matériau constitutif de la membrane et une étape consistant à réticuler ce matériau.

L'invention concerne en outre un procédé de thermalisation d'un outil selon l'invention, ledit procédé consistant à mesurer en continu la température dudit outil par des moyens de mesure de la température et à comparer la température mesurée à une température de travail définie, si la température mesurée est inférieure à la température de travail définie alors les moyens de thermalisation chauffent ledit outil et si la température mesurée est supérieure à la température de travail définie alors les moyens de thermalisation refroidissent ledit outil.

### Description des figures

D'autres particularités et avantages ressortiront clairement de la description qui en est faite ci-après, à titre indicatif et nullement limitatif, en référence aux dessins annexés, dans lesquels :
- la [Fig.1] représente une forme supérieure pour la station de bombage selon l'invention ;
- la [Fig.2] représente une station de bombage selon l'invention ;
- la [Fig.3] représente une membrane pour station de bombage selon l'invention ;
- les figures 4 et 5 représentent les moyens de thermalisation de la membrane selon l'invention ;
- les figures 6, 7, 8, 9, 9', 10a et 10b représentent différents moyens pour augmenter la conductivité thermique de la membrane selon l'invention.

### Description détaillée

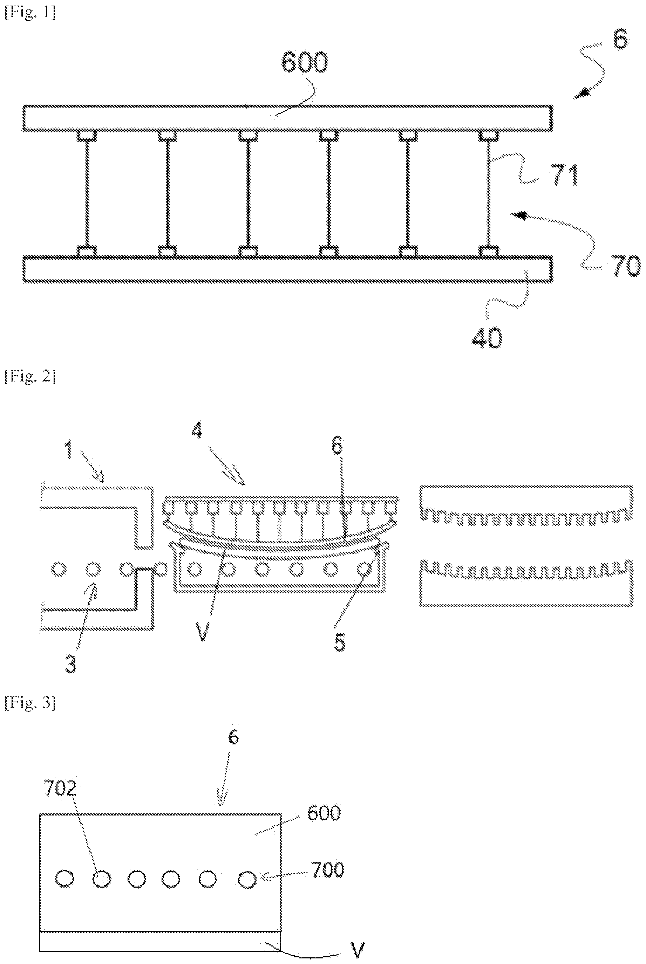

A la [Fig.1], un outil de conformation selon l'invention est représenté. Un tel outil de conformation comprend une membrane 600 réalisée dans un matériau du type polymère et associée à des éléments de translation 70 sous forme de vérins mécaniques 71. Une des extrémités de chaque élément de translation 70 est reliée à la membrane 600 et l'autre extrémité à une base rigide 40.

Cet outil de conformation est représenté retourné par rapport à sa situation en cours d'utilisation comme montré [Fig.2] et suivantes.

Cet outil de conformation selon l'invention est utilisé pour la conformation d'un substrat chaud ou pour la conformation d'un substrat apte à devenir chaud durant ladite conformation. Un exemple de substrat chaud est une feuille de verre sortant d'un four pour être mise en forme.

A la [Fig.2], un four 1 dans lequel une feuille de verre V défile sur un convoyeur à rouleaux V est représenté. Durant son séjour dans le four, la feuille de verre est amenée à sa température de ramollissement. La feuille de verre est ensuite conduite toujours supportée par le convoyeur 3 jusqu'à un dispositif de formage 4.

Ce dispositif de formage 4 est l'endroit où la feuille de verre ramollie est manipulée pour prendre sa forme quasi définitive.

Dans le dispositif de formage 4, un cadre de pressage 5 est disposé sous le plan défini par le convoyeur à rouleaux 3. Lorsque la feuille de verre V arrive au-dessus de ce cadre, des organes non représentés sur les figures permettent d'assurer un positionnement précis de ladite feuille de verre, puis son mouvement est arrêté par l'arrêt des rouleaux dans la zone de bombage. Le cadre de pressage 5 traverse alors le lit de rouleaux 3 pour venir soulever la feuille de verre.

Comme évoqué précédemment, le cadre de pressage 5 possède la forme que l'on souhaite conférer à la feuille de verre V et s'ajuste à la feuille de verre. Le cadre de pressage est conçu de façon à pouvoir traverser le lit de rouleaux 3.

Le cadre de pressage 5 ayant pris en charge la feuille de verre V se déplace pour presser celle-ci contre une forme de bombage 6 positionnée au-dessus du cadre 5. La mise en forme de la feuille de verre V se fait donc en pressant la feuille de verre entre la forme de bombage et le cadre de pressage 5. La forme de bombage 6 est associée à des éléments de translation 70 sous forme de vérins mécaniques 71 comme visible à la |Fig.1].

La forme de bombage 6 est une surface, de préférence pleine, dont la forme est adaptable c'est-à-dire apte à permettre la réalisation de feuilles de verre ayant des courbures différentes. Cette forme de bombage est, optionnellement, recouverte d'un matériau intercalaire du type tricot composé à base de fibres réfractaires comme de la silice, métalliques ou de polymère résistant à haute température comme des fibres de Kevlar^{®} par exemple. Ce matériau intercalaire n'a pas été représenté sur les figures 2 et 3 et suivantes. La forme supérieure 6 est un outil de conformation selon l'invention.

Une autre application concerne le formage d'une feuille métallique dans le dispositif de formage 4. Cette feuille métallique est portée jusqu'à une température à laquelle elle ramollit afin d'être, ensuite, mise en forme par le cadre de pressage et la forme de bombage.

Dans une autre application, l'outil de conformation est utilisé dans le cadre d'un procédé durant lequel le substrat devant être mis en forme subit une montée en température. Un tel procédé consiste, par exemple, en la réalisation d'une pièce en matériau composite renforcé par des fibres de quelconque nature (métalliques, de carbone, de verre ou céramiques) à partir de nappes de fibres et d'un matériau devant former la matrice du produit, par exemple du type résine, appliquée sous forme liquide ou à partir de feuilles. Dans cette application, l'outil de conformation est placé de façon identique au cas de la [Fig.1] ; la surface de conformation elle-même se présente alors en partie supérieure du dispositif. Les différents types de matériaux sont empilés en couches successives sur la surface de l'outil de conformation. L'ensemble de cet empilage se conforme soit naturellement sous son propre poids, soit à la main afin de bien plaquer les différentes couches de l'empilement contre la surface de formage, soit à l'aide d'une contre-forme supérieure se présentant comme un anneau périphérique lorsque les composants de l'empilement ont une rigidité naturelle qui ne permet pas leur mise en forme spontanée sous leur propre poids ou manuellement. Lorsque l'on veut éliminer l'air résiduel afin de ne pas former de porosités dans le matériau final, l'ensemble de l'empilage peut être introduit dans un poche souple dans laquelle il est possible d'effectuer le vide par pompage de l'air résiduel. Cette poche est elle-même maintenue au contact de l'outil de conformation. Ladite préparation subit ensuite une étape durant laquelle la matrice e qui imprègne les fibres est durcie sur l'outil de conformation, afin de former ledit matériau composite avec la forme souhaitée. Ce durcissement peut être opéré chimiquement par application d'un agent durcisseur ou par des conditions de pression ou de température particulières. Ce durcissement peut être exothermique c'est-à-dire dégageant de la chaleur.

Une membrane 600 pour un outil de conformation selon l'invention a des dimensions en longueur et largeur d'au moins 100*100 mm et peut aller jusqu'à des dimensions de 2000*3000 mm ou supérieures et présente une épaisseur comprise entre 5 et 50 mm, de préférence entre 10 et 45 mm et de préférence encore, entre 15 et 40 mm. Pour permettre à la membrane 600 de supporter les fortes températures, ledit outil de conformation comprend des moyens de thermalisation 700 comme visible à la [Fig.3]. Ces moyens de thermalisation 700 comprennent une pluralité de conduits 702 dans lesquels un fluide caloporteur circule. Ces conduits 702 s'étendent selon au moins l'une des directions (longueur, largeur) de la membrane, dans son profil. De préférence, ces conduits s'étendent parallèlement entre eux et parallèlement à la face principale inférieure de la membrane 700 qui est en contact avec la feuille de verre V à former.

Encore plus de préférence, les moyens de thermalisation 700 comprennent une première série de conduits 702 s'étendant selon la longueur de la membrane et une seconde série de conduits 702 s'étendant selon la largeur de la membrane.

Les conduits 702 sont réalisés dans un matériau souple permettant aux conduits 702 de se déformer sans se briser lorsque la membrane 600 est mise en forme. Un matériau pouvant, à titre d'exemple, être choisi est le téflon ou le polyéthylène.

Ces conduits 702 sont agencés pour permettre d'avoir le meilleur échange thermique possible.

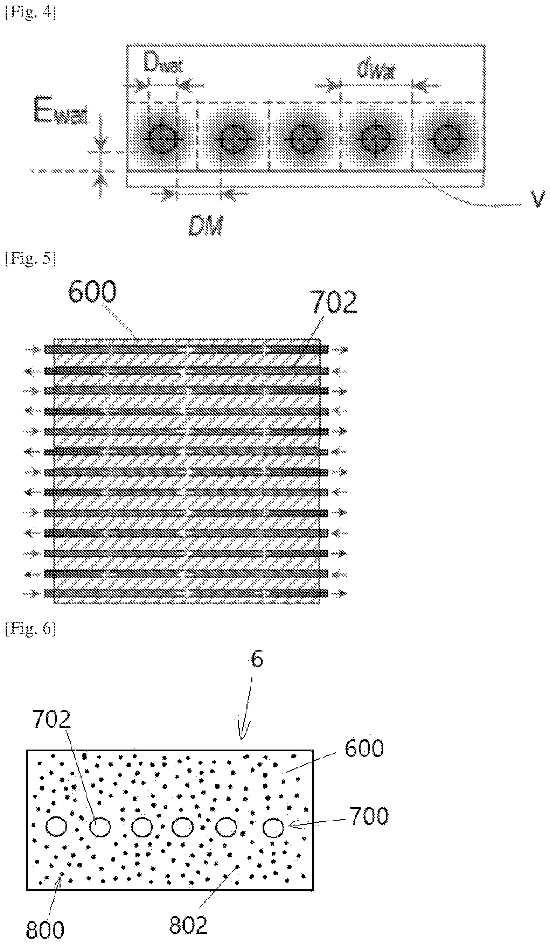

Pour cela, différentes règles ou critères sont utilisés pour définir l'agencement, la configuration des conduits, ces critères sont : le diamètre des conduits D_{wat}, l'écartement des conduits *DM* et la distance E_{wat} entre les conduits et la face inférieure de la membrane c'est-à-dire la face en contact du verre chaud comme visible à la [Fig.4].

Le critère de distance entre les conduits et la face inférieure de la membrane est important car si les conduits 702 sont trop proches de la face inférieure (en contact du verre) alors apparaissent des déformations résiduelles de la surface inférieure de la membrane lorsque celle-ci est sollicitée mécaniquement. Ces déformations se présentent sous la forme de lignes régulières à l'origine de légers sillons creux à la surface de la membrane et qui sont susceptibles de se transférer à la feuille de verre lors de l'opération de formage.

Les critères de la distance *DM* entre deux conduits adjacents et du diamètre des conduits sont tels que la distance entre deux conduits adjacents doit être environ égale à deux fois la valeur de E_{wat}. L'idée est que chaque conduit draine la chaleur dans un tube virtuel de base carrée au sein de la membrane dont le côté a pour longueur la distance *d_{Wat}* environ égale à 2 x E_{wat} + D_{wat}, où D_{wat} est le diamètre des conduits contenant le fluide caloporteur.

Ces critères permettent d'obtenir, pour la paramétrisation géométrique des conduits, les valeurs suivantes :
- la distance E_{wat} est comprise entre 2 et 10 mm, préférentiellement entre 2 et 7 mm et encore préférentiellement entre 3 et 6 mm ;
- la distance *DM* est comprise entre 2 et 20 mm, préférentiellement entre 3 et 15 mm et encore préférentiellement entre 5 et 12 mm ;
- le diamètre des conduits contenant le fluide caloporteur D_{wat} est compris entre 1 et 7 mm, préférentiellement entre 2 et 6 mm et encore préférentiellement entre 3 et 5 mm.

Les autres paramètres liés au moyen de thermalisation sont :
- le débit de fluide caloporteur à l'intérieur du circuit est relativement modeste, typiquement compris entre 1 et 10 l/min, mais peut être plus important en fonction du diamètre des conduits et de la capacité de thermalisation nécessaire ;
- la température du fluide caloporteur dépend de l'écart entre la température mesurée de la membrane et sa température de travail définie. La température du fluide caloporteur est comprise entre -10 et 250 °C, préférentiellement entre 0 et 200 °C et encore préférentiellement entre 10 et 200°C.

Lors du formage d'un substrat chaud, la membrane 600 nécessite un refroidissement. Pour cela, les conduits 702 sont utilisés pour le transport d'un liquide de refroidissement chargé de refroidir ladite membrane 600.

Dans une variante, la circulation du fluide caloporteur dans les conduits 702 est opérée de sorte que la circulation est à double sens comme visible à la [Fig.5]. On comprend par-là que la circulation du fluide caloporteur dans deux conduits 702 adjacents est opposée. En effet, si la circulation se fait toujours dans le même sens, un gradient de température apparait puisque le fluide caloporteur froid entre dans les conduits d'un premier coté et sors des conduits au niveau d'un second coté. Or, ce fluide caloporteur s'est réchauffé en absorbant les calories de la membrane de sorte qu'entre le premier coté et le second coté, un gradient de température apparait. Cela tend à rendre les performances de la membrane moins homogène.

Avec une circulation en double sens et le fait que cette circulation dans deux conduits adjacents est opposée, une influence mutuelle s'opère entre les conduits ayant des circulations différentes permettant de limiter les gradients thermiques surfaciques au niveau de la membrane.

Dans le cas où l'on doit refroidir la membrane, le circuit de thermalisation 700 permet de dissiper les calories de la membrane, la présente invention est telle qu'elle permet astucieusement de diriger les calories vers les moyens de thermalisation 700. En effet, le maximum de chaleur se trouve au niveau de la surface de la membrane en contact avec le substrat chaud, alors que les conduits sont agencés dans la membrane. L'invention permet avantageusement de diriger la chaleur depuis la surface vers les moyens de thermalisation afin que cette chaleur puisse être dissipée.

Pour cela, des moyens d'augmentation de la conductivité 800 sont agencés dans la membrane 600.

Une première solution consiste à augmenter la conductivité thermique de la membrane en rendant le matériau polymère plus conducteur thermiquement.

Pour cela, cette première solution consiste à incorporer, au matériau formant la membrane, des particules 802 dans un matériau ayant une conductivité thermique intrinsèque supérieure à celle du matériau formant la membrane comme visible à la [Fig.6]. Le matériau utilisé pour les particules est, de préférence, un matériau métallique comme par exemple de l'aluminium, du bronze, du cuivre, du fer doux ou à base de carbone comme du graphite ou du noir de carbone.

Ces particules 802 sont ainsi mélangées au polymère avant que celui-ci ne soit moulé puis réticulé.

Pour modifier la conductivité, la proposition de particules 802 est variable de sorte que plus le taux de particules est élevé et plus grande sera la conductivité thermique. Le taux de particules pourra aller jusqu'à 60 % en volume

Par exemple, On passe ainsi aisément de valeurs de conductivité thermique de l'ordre de de 0.2 W·m-1·K-1 pour la matrice élastomère brute à une valeur de conductivité thermique de 0.48 W·m-1·K-1 avec un taux de charge de particules d'aluminium de 40 % en volume.

Dans une variante, la répartition des particules 802 est rendue hétérogène pour ne rendre plus conductrice thermiquement qu'une zone de la membrane seulement.

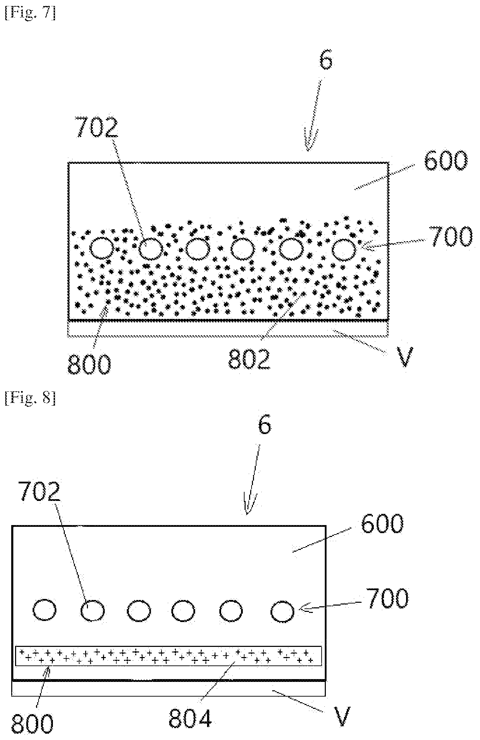

Plus particulièrement, il est envisageable de rendre la zone située entre la surface inférieure qui est en contact avec le substrat chaud de la membrane 600 et les moyens de thermalisation 700 plus thermiquement conductrice comme visible à la [Fig.7].

Pour cela, les particules métalliques 802 choisies présentent des propriétés magnétiques c'est-à-dire qu'elles sont aptes à être attirées par un aimant. Cette possibilité permet, lors du moulage du matériau formant la membrane 600 dans lequel les particules 802 sont mélangées, d'appliquer une force magnétique par l'intermédiaire d'aimants afin d'attirer les particules 802 métalliques magnétiques vers une zone définie et donc de contrôler cette répartition.

Une réalisation alternative consiste à déposer successivement deux couches de matériau, la première chargée de particules 802 améliorant la conduction thermique et constituant la partie inférieure de la membrane 600 de sa surface inférieure jusqu'au niveau des conduits, la partie supérieure étant réalisée à l'aide d'une couche de matériau non chargée en particules conductrices de la chaleur.

Une seconde solution pour diriger la chaleur depuis la surface vers les moyens de thermalisation 700 consiste à incorporer un insert 804 dans la membrane 600 comme visible à la [Fig.8]. Cet insert 804 est un insert réalisé dans un matériau métallique permettant d'augmenter la conductivité thermique de la membrane.

Cet insert 804 est un textile qui peut se présenter sous différentes formes.

Dans une première forme, l'insert 804 sous forme de textile comprend des fibres métalliques ou des fibres de carbone ou un mélange des deux. Ces fibres sont de bon conducteurs de la chaleur du fait du matériau qui les constitue. Par ailleurs, la bonne conduction est également permise par un facteur de forme élevé car ces fibres se présentent sous la forme de filaments. En effet, plus le facteur de forme des particules introduites est élevé, meilleure est l'amélioration de la conductivité thermique de la membrane. Le facteur de forme permet de quantifier de combien une particule s'écarte d'une sphère. On peut ainsi définir un indice d'allongement égal au rapport longueur sur largeur pour des particules allongées comme des grains de riz par exemple ou bien un indice d'aplatissement comme le rapport diamètre sur épaisseur dans le cas d'une pièce de monnaie par exemple. De façon pratique, l'utilisation de filaments comme des fibres métalliques ou de carbone coupées et dispersées dans la matrice élastomère est très efficace pour augmenter sa conductivité thermique.

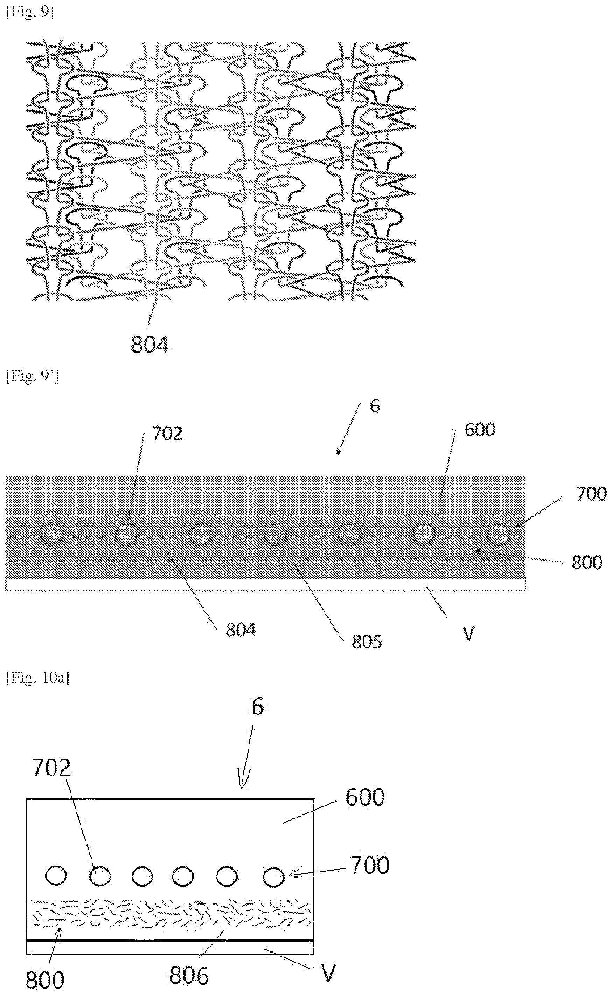

Dans une seconde forme, le textile se présente sous la forme d'un tricot comme visible à la [Fig.9]. Ce tricot est composé d'un empilement de mailles. Chaque maille est en fait une boucle de fil d'une certaine longueur. Par rapport à un tissu, le fil dans une maille de tricot est relativement distendu, ce qui confère au tricot dans son ensemble une grande souplesse ainsi que la capacité à se conformer à un grand nombre de géométries. Plus précisément, chaque boucle possède à la fois, la capacité à se distordre très largement lorsque le tricot est déformé macroscopiquement et à revenir à sa géométrie initiale lorsque la déformation macroscopique cesse.

De plus, comme le fil formant chaque maille présente un bon facteur de forme, l'utilisation d'un tricot permet donc d'avoir une bonne conductivité thermique tout en ayant la souplesse permettant au tricot de se déformer avec la membrane.

Dans une troisième forme, le textile se présente sous la forme d'un fil filé lui-même fabriqué à partir de fibres métalliques finement divisées d'un diamètre compris entre 8 et 20 µm et plus particulièrement ente 8 et 16 µm. Un fil « filé » a la caractéristique d'être formé à partir de fibres discontinues. Ces dernières sont maintenues ensemble par torsion et forment un composant élémentaire appelé « brin ». Ce sont ensuite plusieurs « brins » qui sont torsadés entre eux pour former le fil filé. Le fil filé a pour propriété d'être « poilu » ce qui fait qu'il existe un grand nombre d'extrémités de fibres élémentaires qui dépassent de la surface du tricot lui-même. Cette propriété est intéressante car lorsque l'on dispose de plusieurs couches de tricots, ces extrémités de fibres qui dépassent de la surface des tricots métalliques s'interpénètrent à l'interface de deux couches adjacentes. Ceci permet donc d'établir des ponts thermiques entre les différentes couches de tricot et ainsi d'obtenir une capacité à conduire la chaleur améliorée. Dans une alternative, le textile comprenant des fibres métalliques ou du fil filé ou sous forme de tricot est imprégné. Le textile est imprégné par un matériau de type élastomère semblable, de préférence identique, à celui constituant la membrane. Cette imprégnation permet d'améliorer le contact entre les fibres métalliques et le matériau constitutif de la membrane. En effet, sans imprégnation, il existe une possibilité que le contact entre les fibres métalliques et le matériau constitutif de la membrane soit incomplet du fait que des espaces entre lesdites fibres et le matériau constitutif de la membrane soient présents. Ces espaces remplis d'air ont alors tendances à dégrader les performances de conductivité thermique.

En étant imprégné, le textile limite les possibilités d'avoir des espaces libres entre lesdites fibres et ledit le matériau constitutif de la membrane et donc limite les dégradations des performances thermiques.

Ce textile est, de préférence, agencé entre la surface inférieure de la forme supérieure et les moyens de thermalisation 700. Cet agencement permet de conduire la chaleur depuis la surface jusqu'au moyens de thermalisation 700 qui l'évacue. Cette alternative est représentée [Fig.9]' où des moyens d'augmentation de la conductivité 800 sont agencés dans la partie inférieure de la membrane 600. Ces moyens d'augmentation de la conductivité 800 sont composées d'un empilement de trois inserts 804, en l'occurrence, trois couches de tricots métallique imprégné remplissant l'espace compris entre la surface inférieure de la membrane qui vient en contact avec la feuille de verre chaud V et les moyens de thermalisation 700 composés d'une série de conduits 702 parallèles dans lesquels circule un fluide caloporteur. Afin d'être plus explicite, l'interface entre chaque couche de tricot imprégné est représentée par une ligne pointillée 805. Une couche de tricot imprégné est même disposée au-dessus du réseau des moyens de thermalisation 700 afin d'améliorer encore la conductivité thermique de la membrane tout autour de chaque conduit 702. Les différentes couches de tricot sont avantageusement imprégnées par de l'élastomère lui-même chargé, en partie ou totalement, de fines particules métalliques, ce qui améliore encore la conductivité thermique de l'ensemble.

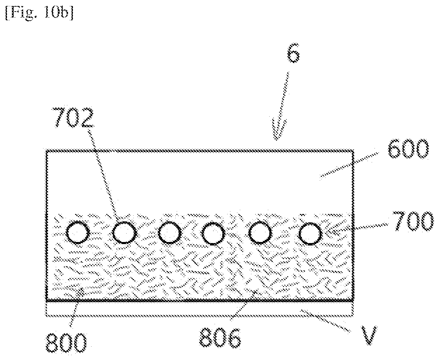

Dans une troisième solution, l'augmentation de la conductivité thermique de la membrane consiste à intégrer des fibres métalliques ou de carbone 806 dans le matériau formant la membrane comme visible aux figures 10a et 10b. Ces fibres métalliques 806 se présentent sous la forme de lamelles ou bandelettes ayant un bon facteur de forme c'est-à-dire permettant une bonne conduction. Ces fibres métalliques ont une longueurs d'environ 0.5 à 10mm pour une largeur comprise entre 0.05 et 0.5 mm environ.

Les moyens d'augmentation de la conductivité 800 peuvent comprendre plusieurs moyens comme par exemple un insert 804 de type textile et des particules 802 ou des particules et des fibres.

Pour réaliser une membrane selon l'invention, le procédé de base consiste à se munir du matériau constitutif de la membrane et d'un moule ayant la forme de la membrane puis à verser/couler ledit matériau dans le moule. Une fois le matériau versé, le tout est laissé au repos afin que l'élastomère puisse réticuler.

Pour intégrer les moyens de thermalisation 700, le moule est apte à permettre auxdits moyen d'y être placer dans la position requise avant que le matériau constitutif de la membrane ne soit versé dans ledit moule.

Dans une alternative, la mise en place des moyens de thermalisation 700 sont préalablement intégrés dans une couche du matériau constitutif de la membrane. Cette alternative consiste à prévoir un moule secondaire dans lequel les moyens de thermalisation 700 sont placés puis à couler le matériau constitutif de la membrane. Le moule secondaire présente la même surface que le moule principal mais avec une épaisseur moindre. Une fois le matériau coulé, il est laissé au repos afin qu'il puisse réticuler. On obtient alors une « tranche » du matériau constitutif de la membrane dans laquelle les moyens de thermalisation 700 sont placés.

Il est alors possible, dans le moule formant la membrane, de verser le reste du matériau constitutif de la membrane tout en insérant la « tranche » du matériau constitutif de la membrane dans laquelle les moyens de thermalisation 700 sont placés. Le tout est ensuite laissé au repos afin que le reste de matériau constitutif puisse réticuler et ainsi obtenir la membrane.

Dans une configuration dans laquelle des particules 802 métalliques ou des fibres 806 métalliques sont intégrées dans la membrane 600, le procédé est modifié pour intégrer une étape d'incorporation de ces particules ou fibres.

Premièrement, ces particules ou fibres métalliques sont intégrées dans le matériau élastomère constitutif de la membrane avant que celui celles-ci ne soit versé dans le moule. Dans ce cas-là, le matériau élastomère est stocké dans un récipient. Les particules ou fibres sont alors versées dans le récipient et le tout est mélangé pour avoir une concentration homogène.

Deuxièmement, ces particules ou fibres métalliques sont intégrées dans le matériau élastomère constitutif de la membrane après que celui celles-ci ne soit versé dans le moule. Dans ce cas-là, deux possibilités sont envisageables : avant la pose des moyens de thermalisation 700 et alors il est possible de mélanger ces particules ou fibres dans le matériau élastomère afin d'avoir une répartition homogène. Ou alors, les particules 802 ou fibres 806 sont intégrées après la pose des moyens de thermalisation 700 et elles s'étendent dans toute l'épaisseur par gravité.

Dans les deux possibilités, il est possible, si les particules ou fibres sont magnétiques, de disposer des moyens magnétiques comme des aimants autour du moule afin de contrôler la répartition de ces particules ou fibres.

Dans une autre configuration dans laquelle un textile est agencé, le procédé est modifié pour intégrer une étape d'incorporation de ce textile. Ce textile est intégré au moment où le matériau élastomère est versé dans le moule et avant la mise en place des moyens de thermalisation 700.

Selon une première solution, une fois que le matériau élastomère est versé, le textile est placé dans le moule. Par gravité, il va se positionner au fond du moule, ledit fond étant la face inférieure ou face en contact avec le verre.

Dans une seconde solution, l'intégration du textile nécessite la réalisation de la membrane en plusieurs itérations. Pour cela, une première itération consiste à verser, dans le moule, une quantité d'élastomère telle qu'elle représente une épaisseur égale à 10% de l'épaisseur totale de la membrane. Cette quantité de matériau élastomère est ensuite laissée au repos afin qu'elle puisse réticuler.

Ensuite, dans une seconde itération, le reste du matériau élastomère est versé. Le textile est ensuite intégré. Ce textile se place, par gravité, au contact de l'élastomère déjà réticulé. Cette seconde solution permet d'éviter que le textile ne soit trop proche de la surface afin d'éviter que ce textile n'entraine l'apparition de défauts de surface.

Dans une alternative à cette seconde solution, un nombre d'itérations supérieur à deux est possible. Il est ainsi possible d'avoir, outre la première itération, une itération par tricot métallique, une itération pour les moyens de thermalisation 700 et une itération finale.

Dans cette seconde solution, les moyens d'augmentation de la conductivité 800 sous formes de particules peuvent être mélangées au matériau constitutif de la membrane avant ou après versement de ce dernier.

Bien entendu, si le textile est magnétique, des aimants peuvent être placés autour du moule afin de contrôler le positionnement dudit textile.

Dans le cas d'un procédé de formage d'un substrat chaud, la membrane 600 présente un profil thermique tel que sa température augmente avec le temps. Les moyens de thermalisation 700 utilisant un liquide de refroidissement sont alors utilisés pour maintenir ladite membrane à une température de fonctionnement, celle-ci étant dépendante du matériau constitutif de la membrane. Le profil de température présente ainsi un profil transitoire dans lequel la température évolue et un profil stable durant lequel la membrane 600 est refroidit et donc la température est régulée.

Or, il a été remarqué que, lorsque la membrane 600 est dans son profil transitoire, la forme des substrats formés est variable car la variation de température de la membrane 600 entraine une réponse de la membrane qui varie.

Pour éviter cela, les conduits 702 des moyens de thermalisation 700 sont utilisés pour raccourcir le profil transitoire et préchauffant ledit outil avant le passage des substrats chaud. Pour cela, les conduits sont utilisés pour qu'un liquide chauffant y circule. Ce liquide chauffant est injecté afin d'augmenter la température de la membrane pour atteindre plus rapidement la température optimale de fonctionnement.

Dans ce cas, les conduits 702 sont connectés à un circuit refroidissant et à un circuit chauffant. Le passage de l'un à l'autre se fait par l'intermédiaire de vannes commandées par une unité de commande. Cette unité de commande est également connectée à des moyens de mesure de la température de la membrane. Ces moyens de mesure comprennent au moins un capteur pouvant être un thermocouple ou une caméra thermique ou un capteur infrarouge. Ainsi, les moyens de mesure permettent à l'unité de commande de passer de l'injection d'un liquide chauffant dans les moyens de thermalisation à un liquide de refroidissement ou inversement.

## Revendications

1. Outil de conformation comprenant une membrane (600) réalisée dans un matériau polymère, ladite membrane présentant une surface de conformation, **caractérisé en ce que** ledit outil comprend des moyens de thermalisation (700) insérés dans ladite membrane

2. Outil selon la revendication 1 dans lequel, ledit outil comprend en outre des moyens (800) permettant d'augmenter la conductivité thermique de la membrane.

3. Outil selon la revendication 1 dans lequel les moyens de thermalisation (700) comprennent au moins un conduit (702) traversant la membrane selon son profil et dans lequel un liquide caloporteur circule.

4. Outil selon la revendication précédente dans lequel les moyens de thermalisation (700) comprennent une série de conduits (702) traversant la membrane selon son profil et dans lequel un liquide caloporteur circule, ces conduits s'étendant parallèlement les uns aux autres.

5. Outil selon la revendication précédente dans lequel le liquide caloporteur de deux conduits (702) adjacents circule de façon opposée.

6. Outil selon l'une des revendications 3 à 5 dans lequel il comprend une autre série de conduits s'étendant dans une direction orthogonale à la direction dans laquelle une première série de conduits s'étendent.

7. Outil selon l'une des revendications précédentes dans lequel les moyens permettant d'augmenter la conductivité thermique (800) de la membrane comprennent des particules (802) métalliques ou à base de carbone intégrées dans le matériau polymère.

8. Outil selon l'une des revendications précédentes, dans lequel les moyens permettant d'augmenter la conductivité thermique (800) de la membrane comprennent des fibres (806) métalliques ou à base de carbone.

9. Outil selon l'une des revendications 1 à 6, dans lequel les moyens permettant d'augmenter la conductivité thermique (800) de la membrane comprennent un textile (804).

10. Outil selon la revendication précédente dans lequel le textile est composé de fibres métalliques ou de fils filés ou est un tricot.

11. Outil selon l'une des revendications précédentes, dans lequel le liquide caloporteur est refroidissant ou chauffant.

12. Dispositif de bombage d'une feuille de verre comprenant, un cadre de pressage (5) agencé pour s'ajuster à la feuille de verre et aller la presser contre une forme supérieure (6), la forme supérieure étant un outil de conformation selon l'une des revendications précédentes.

13. Procédé de réalisation d'une membrane d'un outil de conformation comprenant les étapes suivantes :
- Se munir d'un moule ayant la forme de la membrane à réaliser et du matériau polymère constitutif de la membrane ;
- Verser ledit matériau dans le moule :
- Réticuler le matériau ;
**Caractérisé en ce que** ledit procédé comprend une étape de mise en place de moyens de thermalisation (700) et au moins une étape de mise en place de moyens permettant d'augmenter la conductivité thermique (800).

14. Procédé selon la revendication précédente dans lequel le procédé comprend plusieurs étapes consistant à verser ledit matériau dans le moule et plusieurs étapes consistant à réticuler le matériau, chaque étape consistant à verser le matériau dans le moule étant suivi par une étape consistant à réticuler ledit matériau.

15. Procédé selon l'une des revendications 13 ou 14 dans lequel l'étape de mise en place des moyens de thermalisation consiste à se munir des moyens de thermalisation et à les placer dans le moule avant que le matériau constitutif de la membrane ne soit versé.

16. Procédé selon l'une des revendications 13 à 14 dans lequel l'étape de mise en place des moyens de thermalisation (700) consiste à se munir des moyens de thermalisation et à se munir d'un moule intermédiaire dont la surface est similaire à celle de la membrane à réaliser mais avec une épaisseur moindre, à placer les moyens de thermalisation (700) dans ledit moule intermédiaire et à verser une partie du matériau constitutif de la membrane dans le moule intermédiaire, le matériau étant ensuite réticulé pour former une tranche intermédiaire,
cette tranche intermédiaire étant placée dans le moule de la membrane pendant l'étape consistant à verser ledit matériau constitutif de la membrane.

17. Procédé selon l'une des revendications 13 à 16 dans lequel l'étape de mise en place des moyens d'augmentation de la conductivité thermique (800) consiste à se munir des moyens d'augmentation de la conductivité thermique sous formes de particules (802) ou fibres (806) métalliques ou de carbone et les mélanger au matériau constitutif de la membrane avant que ce matériau ne soit versé.

18. Procédé selon l'une des revendications 13 à 16 dans lequel l'étape de mise en place des moyens d'augmentation de la conductivité thermique consiste à se munir des moyens d'augmentation de la conductivité thermique sous formes de particules ou fibres métalliques ou de carbone et les mélanger au matériau constitutif de la membrane après le versement dudit matériau constitutif de la membrane.

19. Procédé selon l'une des revendications 13 à 16 dans lequel l'étape de mise en place des moyens d'augmentation de la conductivité thermique consiste à se munir des moyens d'augmentation de la conductivité thermique sous formes d'un textile et le placer dans le moule pendant le versement du matériau constitutif de la membrane.

20. Procédé selon l'une des revendications 13 à 16 dans lequel l'étape de mise en place des moyens d'augmentation de la conductivité thermique sous forme d'un textile consiste à se munir du textile et à se munir d'un moule intermédiaire dont la surface est similaire à celle de la membrane à réaliser mais avec une épaisseur moindre, à y placer ledit textile et à verser une partie du matériau constitutif de la membrane dans ledit moule intermédiaire, le matériau étant ensuite réticulé pour former une tranche intermédiaire,
Cette tranche intermédiaire étant placée dans le moule de la membrane pendant l'étape consistant à verser ledit matériau constitutif de la membrane

21. Procédé selon l'une des revendications 13 à 20 dans lequel des moyens permettant d'augmenter la conductivité thermique sont magnétiques et dans lequel au moins une étape de mise en place de moyens permettant d'augmenter la conductivité thermique utilise des aimants pour les positionner.

22. Procédé selon l'une des revendications 13 à 21 dans lequel le procédé est tel qu'il comprend, avant les étapes mise en place de moyens de thermalisation (700) et de mise en place de moyens permettant d'augmenter la conductivité thermique, au moins une étape consistant à verser une partie du matériau constitutif de la membrane et une étape consistant à réticuler ce matériau.

23. Procédé de thermalisation d'un outil selon l'une des revendications 1 à 11, ledit procédé consistant à mesurer en continu la température dudit outil par des moyens de mesure de la température et à comparer la température mesurée à une température de travail définie, si la température mesurée est inférieure à la température de travail définie alors les moyens de thermalisation chauffent ledit outil et si la température mesurée est supérieure à la température de travail définie alors les moyens de thermalisation refroidissent ledit outil.

## Patentansprüche

1. Formgebungswerkzeug, umfassend eine Membran (600) aus einem Polymermaterial, wobei die Membran eine Formgebungsoberfläche aufweist, **dadurch gekennzeichnet, dass** das Werkzeug in die Membran eingefügte Thermalisierungsmittel (700) umfasst

2. Werkzeug nach Anspruch 1, wobei das Werkzeug ferner Mittel (800) zum Erhöhen der Wärmeleitfähigkeit der Membran umfasst.

3. Werkzeug nach Anspruch 1, wobei die Thermalisierungsmittel (700) mindestens eine Leitung (702) umfassen, die durch die Membran entsprechend ihrem Profil verläuft und in der eine Wärmeträgerflüssigkeit zirkuliert.

4. Werkzeug nach dem vorstehendem Anspruch, wobei die Thermalisierungsmittel (700) eine Reihe von Leitungen (702) umfassen, die durch die Membran entsprechend ihrem Profil verlaufen und in denen eine Wärmeträgerflüssigkeit zirkuliert, wobei sich diese Leitungen parallel zueinander erstrecken.

5. Werkzeug nach dem vorstehendem Anspruch, wobei die Wärmeträgerflüssigkeit zweier benachbarter Leitungen (702) in entgegengesetzten Richtungen zirkuliert.

6. Werkzeug nach einem der Ansprüche 3 bis 5, wobei es eine weitere Reihe von Leitungen umfasst, die sich in einer Richtung erstrecken, die orthogonal zu der Richtung ist, in der sich eine erste Reihe von Leitungen erstreckt.

7. Werkzeug nach einem der vorstehenden Ansprüche, wobei die Mittel zum Erhöhen der Wärmeleitfähigkeit (800) der Membran Partikel (802) aus Metall oder auf Kohlenstoffbasis umfassen, die in das Polymermaterial eingebracht sind.

8. Werkzeug nach einem der vorstehenden Ansprüche, wobei die Mittel zum Erhöhen der Wärmeleitfähigkeit (800) der Membran Fasern (806) aus Metall oder auf Kohlenstoffbasis umfassen.

9. Werkzeug nach einem der Ansprüche 1 bis 6, wobei die Mittel zum Erhöhen der Wärmeleitfähigkeit (800) der Membran ein Textil (804) umfassen.

10. Werkzeug nach dem vorstehendem Anspruch, wobei das Textil aus Metallfasern oder gesponnenen Fäden besteht oder ein Gewirk ist.

11. Werkzeug nach einem der vorstehenden Ansprüche, wobei die Wärmeträgerflüssigkeit kühlend oder wärmend ist.

12. Vorrichtung zum Biegen einer Glasscheibe, umfassend einen Pressrahmen (5), der so angeordnet ist, dass er sich an die Glasscheibe anpasst und sie gegen eine obere Form (6) presst, wobei die obere Form ein Formgebungswerkzeug nach einem der vorstehenden Ansprüche ist.

13. Verfahren zur Herstellung einer Membran eines Formgebungswerkzeugs, das folgende Schritte umfasst:
- Bereitstellen einer die Gestalt der herzustellenden Membran aufweisenden Form und des Polymermaterials, aus dem die Membran besteht:
- Gießen des Materials in die Form;
- Vernetzen des Materials;
**dadurch gekennzeichnet, dass** das Verfahren einen Schritt des Einrichtens von Thermalisierungsmitteln (700) und mindestens einen Schritt des Einrichtens von Mitteln zum Erhöhen der Wärmeleitfähigkeit (800) umfasst.

14. Verfahren nach dem vorstehendem Anspruch, wobei das Verfahren mehrere Schritte des Gießens des Materials in die Form und mehrere Schritte des Vernetzens des Materials umfasst, wobei auf jeden Schritt des Gießens des Materials in die Form ein Schritt des Vernetzens des Materials folgt.

15. Verfahren nach einem der Ansprüche 13 oder 14, wobei der Schritt des Einrichtens der Thermalisierungsmittel darin besteht, die Thermalisierungsmittel bereitzustellen und in der Form zu platzieren, bevor das Material, aus dem die Membran besteht, gegossen wird.

16. Verfahren nach einem der Ansprüche 13 bis 14, wobei der Schritt des Einrichtens der Thermalisierungsmittel (700) darin besteht, die Thermalisierungsmittel bereitzustellen und eine Zwischenform bereitzustellen, deren Oberfläche ähnlich der der herzustellenden Membran ist, jedoch eine geringere Dicke aufweist, die Thermalisierungsmittel (700) in der Zwischenform zu platzieren und einen Teil des Materials, aus dem die Membran besteht, in die Zwischenform zu gießen, wobei das Material sodann vernetzt wird, um ein Zwischenstück zu bilden, wobei das Zwischenstück während des Schritts des Gießens des Materials, aus dem die Membran besteht, in der Form der Membran platziert wird.

17. Verfahren nach einem der Ansprüche 13 bis 16, wobei der Schritt des Einrichtens der Mittel zum Erhöhen der Wärmeleitfähigkeit (800) darin besteht, die Mittel zum Erhöhen der Wärmeleitfähigkeit in Form von Partikeln (802) oder Fasern (806) aus Metall oder Kunststoff bereitzustellen und diese mit dem Material zu vermischen, aus dem die Membran besteht, bevor dieses Material gegossen wird.

18. Verfahren nach einem der Ansprüche 13 bis 16, wobei der Schritt des Einrichtens der Mittel zum Erhöhen der Wärmeleitfähigkeit darin besteht, die Mittel zum Erhöhen der Wärmeleitfähigkeit in Form von Partikeln oder Fasern aus Metall oder Kunststoff bereitzustellen und diese nach dem Gießen des Materials, aus dem die Membran besteht, mit dem Material, aus dem die Membran besteht, zu vermischen.

19. Verfahren nach einem der Ansprüche 13 bis 16, wobei der Schritt des Einrichtens der Mittel zum Erhöhen der Wärmeleitfähigkeit darin besteht, die Mittel zum Erhöhen der Wärmeleitfähigkeit in Form eines Textils bereitzustellen und diese während des Gießens des Materials, aus dem die Membran besteht, in der Form zu platzieren.

20. Verfahren nach einem der Ansprüche 13 bis 16, wobei der Schritt des Einrichtens der Mittel zum Erhöhen der Wärmeleitfähigkeit in Form eines Textils darin besteht, ein Textil bereitzustellen und eine Zwischenform bereitzustellen, deren Oberfläche ähnlich der der herzustellenden Membran ist, jedoch eine geringere Dicke aufweist, das Textil dort hinein zu platzieren und einen Teil des Materials, aus dem die Membran besteht, in die Zwischenform zu gießen, wobei das Material dann vernetzt wird, um ein Zwischenstück zu bilden,
wobei dieses Zwischenstück während des Schritts des Gießens des Materials, aus dem die Membran besteht, in der Membranform platziert wird.

21. Verfahren nach einem der Ansprüche 13 bis 20, wobei Mittel zum Erhöhen der Wärmeleitfähigkeit magnetisch sind und wobei bei mindestens einem Schritt des Einrichtens von Mitteln zum Erhöhen der Wärmeleitfähigkeit Magnete zu deren Positionierung verwendet werden.

22. Verfahren nach einem der Ansprüche 13 bis 21, wobei das Verfahren derart ist, dass es vor den Schritten des Einrichtens von Thermalisierungsmitteln (700) und des Einrichtens von Mitteln zum Erhöhen der Wärmeleitfähigkeit mindestens einen Schritt des Gießens eines Teils des Materials, aus dem die Membran besteht, und einen Schritt des Vernetzens dieses Materials umfasst.

23. Verfahren zum Thermalisieren eines Werkzeugs nach einem der Ansprüche 1 bis 11, wobei das Verfahren im kontinuierlichen Messen der Temperatur des Werkzeugs durch Temperaturmessmittel und Vergleichen der gemessenen Temperatur mit einer definierten Arbeitstemperatur besteht, wobei, wenn die gemessene Temperatur unter der definierten Arbeitstemperatur liegt, die Thermalisierungsmittel das Werkzeug erwärmen, und wenn die gemessene Temperatur über der definierten Arbeitstemperatur liegt, die Thermalisierungsmittel das Werkzeug abkühlen.

## Claims

1. A shaping tool comprising a membrane (600) made of a polymer material, said membrane having a shaping surface, **characterized in that** said tool comprises thermalization means (700) inserted into said membrane.

2. The tool according to claim 1 wherein said tool further comprises means (800) for increasing the thermal conductivity of the membrane.

3. The tool according to claim 1 wherein the thermalization means (700) comprise at least one conduit (702) traversing the membrane according to its profile and wherein a heat transfer liquid flows.

4. The tool according to the preceding claim wherein the thermalization means (700) comprise a series of conduits (702) traversing the membrane according to its profile and wherein a heat transfer liquid flows, these conduits extending parallel to each other.

5. The tool according to the preceding claim wherein the heat transfer fluid in two adjacent conduits (702) flows in opposite directions.

6. The tool according to one of claims 3 to 5 wherein it comprises another series of conduits extending in a direction orthogonal to the direction wherein a first series of conduits extend.

7. The tool according to one of the preceding claims wherein the means for increasing the thermal conductivity (800) of the membrane comprise metallic or carbon-based particles (802) embedded in the polymer material.

8. The tool according to one of the preceding claims wherein the means for increasing the thermal conductivity (800) of the membrane comprise metallic or carbon-based fibers (806).

9. The tool according to one of claims 1 to 6, wherein the means for increasing the thermal conductivity (800) of the membrane comprise a textile (804).

10. The tool according to the preceding claim wherein the textile is composed of metal fibers or spun yarns or is a knit.

11. The tool according to one of the preceding claims, wherein the heat transfer fluid is cooling or heating.

12. A glass sheet bending device comprising, a pressing frame (5) arranged to fit the glass sheet and press it against an upper mold (6), the upper mold being a shaping tool according to one of the preceding claims.

13. A method for constructing a membrane of a shaping tool comprising the following steps:
- Providing a mold with the shape of the membrane to be made and the polymer material that constitutes the membrane;
- Pouring said material into the mold;
- Cross-linking the material;
**Characterized in that** said method comprises a step of providing thermalization means (700) and at least one step of providing means for increasing thermal conductivity (800).

14. The method according to the preceding claim, wherein the method comprises several steps of pouring said material into the mold and several steps of cross-linking the material, each step of pouring the material into the mold being followed by a step of cross-linking said material.

15. The method according to one of claims 13 or 14, wherein the step of placing the thermalization means consists of providing the thermalization means and placing them in the mold before the membrane material is poured.

16. The method according to one of claims 13 to 14 wherein the step of placing the thermalization means (700) consists of providing the thermalization means and of providing an intermediate mold whose surface is similar to that of the membrane to be made but with a lesser thickness, placing the thermalization means (700) in said intermediate mold, and pouring a part of the membrane material into the intermediate mold, the material being then cross-linked to form an intermediate slice, this intermediate slice being placed in the membrane mold during the step of pouring said membrane material.

17. The method according to one of claims 13 to 16, wherein the step of placing the thermal conductivity (800) increasing means consists of providing the thermal conductivity increasing means in the form of metallic or carbon particles (802) or fibers (806) and mixing them with the membrane material before the material is poured.

18. The method according to one of claims 13 to 16, wherein the step of placing the thermal conductivity increasing means consists of providing the thermal conductivity increasing means in the form of metallic or carbon particles or fibers and mixing them with the membrane material after pouring said membrane material.

19. The method according to one of claims 13 to 16, wherein the step of placing the thermal conductivity increasing means consists of providing the thermal conductivity increasing means in the form of a textile and placing it in the mold while the membrane material is being poured.

20. The method according to one of claims 13 to 16, wherein the step of placing the thermal conductivity increasing means in the form of a textile consists of providing the textile and in providing an intermediate mold whose surface is similar to that of the membrane to be constructed but with a lesser thickness, placing said textile therein, and pouring a portion of the membrane material into said intermediate mold, the material being then cross-linked to form an intermediate slice,
This intermediate slice being placed in the membrane mold during the step of pouring said membrane material.

21. The method according to one of claims 13 to 20 wherein means for increasing thermal conductivity are magnetic and wherein at least one step of placing means for increasing thermal conductivity uses magnets to position them.

22. The method according to one of claims 13 to 21, wherein the method is such that it comprises, before the steps of setting up thermalization means (700) and setting up means for increasing thermal conductivity, at least one step consisting of pouring a portion of the membrane material and a step consisting of cross-linking this material.

23. A method of thermalizing a tool according to one of claims 1 to 11, said method consisting of continuously measuring the temperature of said tool by temperature measuring means and comparing the measured temperature with a defined working temperature, if the measured temperature is lower than the defined working temperature then the thermalization means heat said tool, and if the measured temperature is higher than the defined working temperature, then the thermalization means cool said tool.
